**Europäisches Patentamt**

**European Patent Office**

**Office européen des brevets**

(19)

(11) Veröffentlichungsnummer : **0 467 192 B1**

(12) # EUROPÄISCHE PATENTSCHRIFT

(45) Veröffentlichungstag der Patentschrift :
06.10.93 Patentblatt 93/40

(51) Int. Cl.⁵ : **B01J 23/42,** B01J 21/18,
C01B 21/14

(21) Anmeldenummer : **91111373.6**

(22) Anmeldetag : **09.07.91**

(54) **Platin-Graphitträger-Katalysatoren und deren Verwendung.**

(30) Priorität : **18.07.90 DE 4022853**

(43) Veröffentlichungstag der Anmeldung :
**22.01.92 Patentblatt 92/04**

(45) Bekanntmachung des Hinweises auf die
Patenterteilung :
**06.10.93 Patentblatt 93/40**

(84) Benannte Vertragsstaaten :
**BE CH DE ES FR GB IT LI NL**

(56) Entgegenhaltungen :
**EP-A- 0 059 907
EP-A- 0 308 719
EP-A- 0 334 121
GB-A- 2 185 347
US-A- 4 659 686**

(72) Erfinder : **Weiss, Franz-Josef, Dr.
Schilfweg 1
W-6708 Neuhofen (DE)**
Erfinder : **Fuchs, Hugo, Dr.
Egellstrasse 28
W-6700 Ludwigshafen (DE)**
Erfinder : **Steigleiter, Werner
Im Waldhof 4
W-6703 Limburgerhof (DE)**
Erfinder : **Hoelderich, Wolfgang, Dr.
Mannheimer Strasse 18 c
W-6710 Frankenthal (DE)**
Erfinder : **Guns, Luc
Apoldaer Weg 26
W-6800 Mannheim 31 (DE)**
Erfinder : **Neubauer, Gerald, Dr.
Mozartstrasse 24
W-6940 Weinheim (DE)**
Erfinder : **Ritz, Josef, Dr.
Osloer Weg 8
W-6700 Ludwigshafen (DE)**

(73) Patentinhaber : **BASF Aktiengesellschaft
Carl-Bosch-Strasse 38
D-67063 Ludwigshafen (DE)**

EP 0 467 192 B1

**Beschreibung**

Für die Hydrierung von organischen und anorganischen Verbindungen eignen sich Edelmetalle wie Palladium, Platin oder Ruthenium, die auf unterschiedliche Träger wie Siliciumdioxid, Aluminiumoxid, Graphit oder Aktivkohle aufgebracht sind, wie aus "Katalytische Hydrierungen im organisch chemischen Laboratorium" F. Zimalkowski, Ferdinand Enke Verlag, Stuttgart (1965) bekannt ist.

Wesentlich für die Aktivität solcher Katalysatoren ist die hohe Dispersion des Edelmetalls auf dem Katalysatorträger. Wie aus "Structure of Metallic Catalyst" J.F. Anderson, Academic Press (1975), Seiten 164ff bekannt ist, kann es bei solchen Katalysatoren unter Reaktionsbedingungen und durch Agglomerieren zur Zunahme der Partikelgröße des aufgebrachten Edelmetalls und zur Abnahme der Dispersion und zudem zur Ablösung des elementaren Edelmetalls von der Trägermasse kommen.

Aus der DE-PS 956 038 sind bereits Platin-Graphitträger-Katalysatoren bekannt, die durch Fällen von Platin auf suspendierten Graphitträgern gegebenenfalls unter Zusatz von vergiftenden Mitteln wie Schwefel-, Selen-, Arsen- oder Tellurverbindungen erhalten werden. Solche Katalysatoren eignen sich z.B. zur katalytischen Hydrierung von Stickstoffmonoxid in Gegenwart von wäßrigen Mineralsäuren zu Hydroxylammoniumsalzen. Diese Katalysatoren haben den Nachteil, daß bei längerem Gebrauch ihre Aktivität vermindert wird und sie zur Bildung von erhöhten Mengen an Nebenprodukten Anlaß geben. Insbesondere wurde jedoch beobachtet, daß die Katalysatoraktivität von Charge zu Charge des hergestellten Katalysators schwankt.

Es war deshalb die technische Aufgabe gestellt, Platin-Graphitträger-Katalysatoren zur Verfügung zu stellen, die eine lange Lebensdauer haben und wenig Schwankungen in der Katalysatoraktivität von Charge zu Charge aufweisen und darüber bei der Hydrierung eine hohe Selektivität und hohe Raumzeitausbeute ermöglichen.

Diese Aufgabe wird gelöst durch Platin-Graphitträger-Katalysatoren mit einem Platingehalt von 0,01 bis 5 Gew.-%, dadurch gekennzeichnet, daß der Graphitträger eine Korngröße von 1 bis 600 µm und folgende Korngrößenverteilung

```
183     bis  600 µm    15 Vol.% + 15 % absolut
68,3 bis 183 µm    30 Vol.% + 20 %
31,0 bis  68,3 µm 25 Vol.% + 20 %
17,1 bis  31,0 µm 15 Vol.% + 10 %
 5,2 bis  17,1 µm 12 Vol.% + 10 %
          5,2 µm  5 Vol.% +  5 %
```

aufweist.

Ferner ist ein Gegenstand der Erfindung die Verwendung von Platin-Graphitträger-Katalysatoren, bei denen der Graphitträger eine Korngröße von 1 bis 600 µm und folgende Korngrößenverteilung

```
183     bis  600 µm    15 Vol.% + 15 % absolut
68,3 bis 183 µm    30 Vol.% + 20 %
31,0 bis  68,3 µm 25 Vol.% + 20 %
17,1 bis  31,0 µm 15 Vol.% + 10 %
 5,2 bis  17,1 µm 12 Vol.% + 10 %
          5,2 µm  5 Vol.% +  5 %
```

als Hydrierkatalysatoren aufweist.

Die erfindungsgemäßen Platin-Graphitträger-Katalysatoren haben den Vorteil, daß sie sich weniger rasch verändern und hierdurch eine längere Lebensdauer aufweisen und eine hohe Selektivität und hohe Raumzeitausbeute bei der Hydrierung ermöglichen. Darüber hinaus haben die neuen Katalysatoren den Vorteil, daß sie weniger oft regeneriert werden müssen, wodurch der Verbrauch an Chemikalien und die Verluste an Platin reduziert werden. Schließlich haben die neuen Katalysatoren den Vorteil, daß die Katalysatoraktivität auf hohem Niveau vereinheitlicht wird.

Die erfindungsgemäßen Platin-Graphitträger-Katalysatoren haben einen Gehalt an Platin von 0,01 bis 5 Gew.-%. Vorteilhaft beträgt der Platingehalt 0,01 bis 2,5 Gew.-%, insbesondere 0,1 bis 1 Gew.-%, jeweils bezogen auf die Summe von Platin- und Graphitträger. Platin ist im allgemeinen auf die Oberfläche des Graphitträger aufgebracht und liegt dort im wesentlichen als metallisches Platin vor. Vorteilhaft ist Platin auf der Graphitoberfläche in feiner Verteilung aufgebracht z.B. durch Fällen von metallischem Platin aus einer Lösung auf den darin suspendierten Graphitträgern.

Ein vorteilhaftes Merkmal der Erfindung ist es, daß der Graphitträger eine BET-Oberfläche von 1 bis 30 $m^2/g$, vorzugsweise von 1 bis 15 $m^2/g$, insbesondere von 3 bis 8 $m^2/g$ aufweist.

Im allgemeinen liegt der Graphitträger in suspendierbarer Form vor. Hierbei hat sich eine Korngröße des Graphitträgers von 1 bis 600 µm bewährt. Die Korngrößenverteilung entspricht keiner Gauß'schen Verteilungskurve sondern setzt sich wie folgt zusammen:

```
183    bis 600 µm          15 Vol.-% + 15 % absolut
 68,3  bis 183 µm          30 Vol.-% + 20 %
 31,0  bis  68,3 µm        25 Vol.-% + 20 %
 17,1  bis  31,0 µm        15 Vol.-% + 10 %
  5,2  bis  17,1 µm        12 Vol.-% + 10 %
            5,2 µm          5 Vol.-% +  5 %.
```

Besonders vorteilhaft ist folgende Korngrößenverteilung:

```
183    bis 600 µm          15 Vol.-% +  5 % absolut
 68,3  bis 183 µm          30 Vol.-% + 10 %
 31,0  bis  68,3 µm        25 Vol.-% + 10 %
 17,1  bis  31,0 µm        15 Vol.-% +  5 %
  5,2  bis  17,1 µm        12 Vol.-% +  5 %
            5,2 µm          5 Vol.-% +  3 %.
```

Es versteht sich, daß sich die Zahlen für die Anteile im gesamten Bereich auf 100 % ergänzen.

Weitere vorteilhafte Merkmale der Graphitträger sind eine scheinbare Dichte von 1,7 bis 2,2 g/ml, insbesondere 1,73 bis 1,95 g/ml, ferner vorteilhaft eine Druckfestigkeit von 50 bis 250 $N/mm^2$, insbesondere 50 bis 150 $N/mm^2$. Zudem haben sich Graphitträger mit einer Porösität z.B. von 40 bis 1 %, insbesondere von 30 bis 5 % bewährt. Die Porosität kann nach DIN 51 918 gemessen werden.

Im allgemeinen verwendet man Graphitträger mit einem möglichst geringen Aschegehalt, z.B. von 0,001 bis 1 Gew.-%, insbesondere von 0,01 bis 0,2 Gew.-%. Geeignete Graphitsorten sind z.B. Elektrographitsorten aus denen anhand der vorgegebenen Kennzahlen unschwer eine geeignete Auswahl getroffen werden kann.

Die erfindungsgemäßen Katalysatoren werden in der Regel durch Fällen von Platin aus Platinsalzlösungen auf den in der Lösung suspendierten Graphitträger hergestellt.

Die erfindungsgemäßen Katalysatoren können entweder ohne weitere Zusätze für Hydrierungen verwendet werden oder für spezielle Hydrierzwecke, z.B. für die Hydrierung von Stickstoffmonoxid z.B. durch den Zusatz von vergiftenden Mitteln wie Schwefel-, Selen-, Tellur- oder Arsenverbindungen partiell vergiftet werden. Partiell vergiftete Platin-Graphitträger-Katalysatoren mit einem Schwefel- und/oder Selengehalt von 3 bis 15 Atomprozent bezogen auf Platin haben sich besonders bewährt. Als selektive Vergiftungsmittel bei der Herstellung des erfindungsgemäßen Katalysators eignen sich z.B. Natriumdithionit, Alkalithiosulfate, Schwefelwasserstoff, Alkalisulfid, Alkalipolysulfide, Thioharnstoff, Tellursäure oder Arsensäure oder deren Kombinationen.

In der Regel geht man bei der Herstellung von wäßrigen Lösungen von Hexachloroplatinsäure, Tetrachloroplatinsäure oder deren Salze aus. Mittel zum partiellen Vergiften des Katalysators setzt man vorteilhaft nach Abpuffern der Lösung mit Alkaliacetat zu. Anschließend wird metallisches Platin auf den Graphitträger mittels Reduktionsmitteln, die Platin zu metallischem Platin reduzieren, ausgefällt. Geeignete Reduktionsmittel sind beispielsweise Hydrazin, Formaldehyd oder Ameisensäure. Die Verwendung von Ameisensäure hat sich besonders bewährt. Vorteilhaft wendet man je Gramm Atom Platin 100 bis 1000 mol Reduktionsmittel an. Vorteilhaft hält man bei der Reduktion zu metallischem Platin eine Temperatur von 60 bis 90°C ein. Nach beendeter Reduktion wird der suspendierte Katalysator abfiltriert und zweckmäßig mit Wasser gewaschen.

Die erfindungsgemäßen Katalysatoren eignen sich zur Hydrierung von organischen und anorganischen Verbindungen. Vorteilhaft wird der Katalysator für die Hydrierung von olefinisch oder acetylenisch ungesättigten Verbindungen, weiterhin zur Hydrierung von Carbonsäuren, Aldehyden oder Ketonen zu den entsprechenden Alkoholen oder Nitrilen zu den entsprechenden Aminen verwendet. Ferner eignen sich die erfindungsgemäßen Katalysatoren zur Hydrierung von anorganischen Verbindungen wie zur Entfernung von Sauerstoff aus Gasen, insbesondere jedoch zur Herstellung von Hydroxylammoniumsalzen durch Hydrieren von Stickstoffmonoxid in wäßrigen Mineralsäuren.

Bei der Herstellung von Hydroxylammoniumsalzen hält man in der Regel ein Molverhältnis von Wasserstoff zu Stickstoffmonoxid von 1,5:1 bis 6:1 ein. Besonders gute Ergebnisse erhält man, wenn man darauf achtet, daß in der Reaktionszone ein Molverhältnis von Wasserstoff zu Stickstoffmonoxid von 3,5 bis 5:1 aufrecht erhalten wird.

Vorteilhaft verwendet man als Säuren starke Mineralsäuren wie Salpetersäure, Schwefelsäure oder Phosphorsäure. Geeignet sind auch saure Salze wie Ammoniumbisulfat. In der Regel geht man von 4 bis 6 normalen wäßrigen Säuren aus und läßt im Verlauf der Reaktion die Säurekonzentration nicht unter 0,2 normal fallen.

Die Umsetzung führt man vorteilhaft bei einer Temperatur von 30 bis 80°C durch. Besonders bewährt haben sich Temperaturen von 35 bis 60°C. In der Regel führt man die Umsetzung bei Atmosphärendruck oder erhöhtem Druck, z.B. bis zu 30 bar durch.

Die verwendeten Platin-Graphitträger-Katalysatoren haben vorteilhaft einen Gehalt von 0,2 bis 1 Gew.-% Platin. In der Regel wendet man je Liter verdünnter Mineralsäure von 25 bis 100 g, insbesondere von 30 bis 80 g Platin-Graphitträger-Katalysator an.

Die Erfindung sei an folgenden Beispielen veranschaulicht.

Vergleichsbeispiel (Gauß'sche Normalverteilung)

Als Katalysatorträger wird ein Graphit mit folgender Partikelgrößenverteilung eingesetzt: (Meßgerät: MALVERN MASTERSIZER S2.01. Volumenverteilung)

| | | |
|---|---|---|
| 183 bis 600 $\mu$m | : | 3,3% |
| 68,3 bis 183 $\mu$m | : | 56 % |
| 31,0 bis 68,3 $\mu$m | : | 35,8 % |
| 17,1 bis 31,0 $\mu$m | : | 2,2 % |
| 5,2 bis 17,1 $\mu$m | : | 1,3 % |
| 5,2 $\mu$m | : | 1,4 %. |

a) Herstellung des Katalysators

640 g dieses Graphits werden bei Raumtemepratur mit 10 %iger $HNO_3$ 2 mal gereinigt, getrocknet, dann mit 500 ml $H_2O$, 100 ml Königswasser und 8,5 g Hexachloroplatin-4-Säure-6-Hydrat (3,2 g Platin) über Nacht bei 80°C gerührt.

Am nächsten Tag wird mit 400 ml $H_2O$ verdünnt, auf 30°C abgekühlt, mit Soda neutralisiert bis pH = 3,0 und mit Natriumacetat-3-Hydrat gepuffert. Danach wird so viel Natriumdithionit-Lösung zugefügt, bis $Pt^{4+}$ zu $Pt^{2+}$ reduziert ist. Anschließend wird mit 100 ml 99 %iger Ameisensäure das Platin auf dem Graphit niedergeschlagen.

b) Hydroxylamin-Synthese

Von dem auf diese Weise hergestellten Platin-Graphit-Katalysator werden 200 g (trocken gerechnet) in 5000 ml 20 %iger $H_2SO_4$ suspendiert. Nach der Aktivierung des Katalysators mit $H_2$ bei 40°C werden stündlich 240 l i.N. eines Gemisches aus 66 % (v/v)$H_2$ (99,9 %ig) und 34 % (v/v) Stickoxid (99,4 %ig) in den Reaktor eingeleitet. Die Reaktionstemperatur wird bei 40 bis 41°C gehalten.

Nach Einleitung von insgesamt 1875 l i.N. des NO/$H_2$-Gemisches wurden 5280 ml einer Hydroxylammoniumsulfat-Lösung erhalten mit 15,7 g/l freier $H_2SO_4$, 92,0 g/l $NH_2OH$ (als $(NH_3OH)_2 SO_4$) und 15,0 g/l $NH_3$, gebunden als $NH_4HSO_4$. Es wurden insgesamt 355 l i.N. Abgas mit 76,6 % (v/v) $H_2$, 21,2 % (v/v) NO und 2,2 % (v/v) $N_2O$ erhalten.

Die Auswertung der Versuchsprotokolle ergab:

| Selektivitäten: | 73,4 % zu $NH_2OH$ |
| | 23,2 % zu $NH_3$ |
| | 3,4 % zu $N_2O$ |
| Raum-Zeit-Ausbeuten: | 0,617 Mol/$l_{RR}$ fl. ·h (bezogen NO) |
| | 0,453 Mol/$l_{RR}$ fl. · h (bezogen $NH_2OH$). |
| | (RR fl = Flüssigkeit als Reaktionsraum) |

Beispiel 1

Graphit mit asymmetrischer Partikelgrößenverteilung; für die Herstellung des Katalysators verwendet man einen Graphit mit folgender Partikelgrößenverteilung:

| 183 | bis | 600 | $\mu$m | : | 18,5 % |
|---|---|---|---|---|---|
| 68,3 | bis | 183 | $\mu$m | : | 35,5 % |
| 31,0 | bis | 68,3 | $\mu$m | : | 14,3 % |
| 17,1 | bis | 31,0 | $\mu$m | : | 9,1 % |
| 5,2 | bis | 17,1 | $\mu$m | : | 15,2 % |
| | | <5,2 | $\mu$m | : | 7,3 % |

a) Herstellung des Katalysators

Der Katalysator wurde wie im Vergleichsbeispiel hergestellt jedoch der obengenannte Graphitträger mit asymmetrischer Korngrößenverteilung verwendet.

b) Hydroxylamin-Synthese

Die Hydroxylamin-Synthese erfolgte wie in Beispiel 1 beschrieben, jedoch unter Verwendung des vorgenannten Katalysators.

Nach Einleitung von insgesamt 1628 l i.N. des NO/$H_2$-Gemisches wurden 5300 ml einer Hydroxylammoniumsulfat-Lösung erhalten mit 18,6 g/l freier $H_2SO_4$, 94,7 g/l $NH_2OH$ (gebunden als $(NH_3OH)_2SO_4$) und 8,3 l $NH_3$, gebunden als $NH_4HSO_4$. Es wurden insgesamt 263 l i.N. Abgas mit 76,3 % (v/v) $H_2$, 20,7 % (v/v) NO und 3,0 % (v/v) $N_2O$ erhalten. Die Auswertung ergab:

| Selektivitäten: | 82,2 % zu $NH_2OH$ |
| | 14,0 zu $NH_3$ |
| | 3,8 % zu $N_2O$ |
| Raum-Zeit-Ausbeuten: | 0,987 Mol/$l_{RR}$fl.·h (bezogen NO) |
| | 0,811 Mol %/$l_{RR}$fl.·h (bezogen $NH_{2OH}$). |

Beispiel 2

Graphit mit asymmetrischer Partikelgrößenverteilung

a) Herstellung des Katalysators

Man verfährt so wie es im Vergleichsbeispiel 1 beschrieben ist, verwendet jedoch für die Herstellung des Katalysators einen Graphit mit folgender Partikelgrößenverteilung:

| | | | | |
|---|---|---|---|---|
| 183 | bis | 600 $\mu$m | : | 3,1 % |
| 68,3 | bis | 183 $\mu$m | : | 31,5 % |
| 31,0 | bis | 68,3 $\mu$m | : | 32,2 % |
| 17,1 | bis | 31,0 $\mu$m | : | 16,1 % |
| 5,2 | bis | 17,1 $\mu$m | : | 15,3 % |
| | | <5,2 $\mu$m | : | 1,8 % |

b) Hydroxylamin-Synthese

Die Hydroxylamin-Synthese erfolgte wie in Beispiel 1 beschrieben, jedoch unter Verwendung des vorgenannten Katalysators.

Nach Einleitung von insgesamt 1520 l i.N. des $NO/H_2$-Gemisches wurden 5330 ml einer Hydroxylammoniumsulfat-Lösung erhalten mit 15,9 g/l freier $H_2SO_4$, 99,5 g/l $NH_2OH$ (gebunden als $(NH_3OH)_2SO_4$) und 9,4 l $NH_3$, gebunden als $NH_4HSO_4$. Es wurden insgesamt 304 l i.N. Abgas mit 79,9 % (v/v) $H_2$, 16,1 % (v/v) NO und 3,8 % (v/v) $N_2O$ erhalten. Die Auswertung ergab:

Selektivitäten:    80,2 % zu $NH_2OH$
                   14,7 zu $NH_3$
                   5,1 zu $N_2O$
Raum-Zeit-Ausbeuten:   0,891 Mol/$l_{RR}$fl.·h (bezogen NO)
                       0,715 Mol/$l_{RR}$fl.·h (bezogen $NH_{2OH}$).

Tabelle

| | Selektivitäten (%) | | | Raum-Zeit-Ausbeuten Mol/$l_{RR}$fl.·h) | |
|---|---|---|---|---|---|
| | $NH_2OH$ | $NH_3$ | $N_2O$ | (bezogen NO) | (bez. $NH_2OH$) |
| Vergleichs-beispiel | 73,4 | 23,2 | 3,4 | 0,617 | 0,453 |
| Beispiel 1 | 82,2 | 14,0 | 3,8 | 0,987 | 0,811 |
| Beispiel 2 | 80,2 | 14,7 | 5,1 | 0,891 | 0,715 |

**Patentansprüche**

1.  Platin-Graphitträger-Katalysatoren mit einem Platingehalt von 0,01 bis 5 Gew.-%, dadurch gekennzeichnet, daß der Graphitträger eine Korngröße von 1 bis 600 $\mu$m und folgende Korngrößenverteilung

| | | | | |
|---|---|---|---|---|
| 183 | bis | 600 $\mu$m | 15 Vol.% $\pm$ 15 % | absolut |
| 68,3 | bis | 183 $\mu$m | 30 Vol.% $\pm$ 20 % | |
| 31,0 | bis | 68,3 $\mu$m | 25 Vol.% $\pm$ 20 % | |
| 17,1 | bis | 31,0 $\mu$m | 15 Vol.% $\pm$ 10 % | |
| 5,2 | bis | 17,1 $\mu$m | 12 Vol.% $\pm$ 10 % | |
| | | 5,2 $\mu$m | 5 Vol.% $\pm$ 5 % | |

aufweist.

**2.** Platin-Graphitträger-Katalysatoren nach dem Anspruch 1, dadurch gekennzeichnet, daß der Graphitträger eine scheinbare Dichte von 1,7 bis 2,2 g/ml hat.

**3.** Platin-Graphitträger-Katalysatoren nach den Ansprüchen 1 bis 2, dadurch gekennzeichnet, daß der Graphitträger eine Druckfestigkeit von 50 bis 250 N/mmm² aufweist.

**4.** Platin-Graphitträger-Katalysatoren nach den Ansprüchen 1 bis 3, dadurch gekennzeichnet, daß der Graphitträger eine Porosität von 1 bis 40 % aufweist.

**5.** Platin-Graphitträger-Katalysatoren nach den Ansprüchen 1 bis 4, dadurch gekennzeichnet, daß der Graphitträger eine BET-Oberfläche von 1 bis 30 m²/g hat.

**6.** Platin-Graphitträger-Katalysatoren nach den Ansprüchen 1 bis 5, dadurch gekennzeichnet, daß der Katalysator partiell mit Schwefel und/oder Selen vergiftet ist.

**7.** Verwendung von Platin-Graphitträger-Katalysatoren nach den Ansprüchen 1 bis 6 als Hydrierkatalysatoren.

**8.** Verwendung von Platin-Graphitträger-Katalysatoren nach den Ansprüchen 1 bis 6 für die Herstellung von Hydroxylammoniumsalzen durch katalytisches Hydrieren von Stickstoffmonoxid in wäßrigen Mineralsäuren.

## Claims

**1.** A platinum/graphite supported catalyst having a platinum content from 0.01 to 5 % by weight, wherein the graphite support has a particle size of from 1 to 600 μm and the following particle size distribution:

```
183     to 600  μm    15 % by vol. ± 15 % absolute
 68.3 to 183  μm    30 % by vol. ± 20 %
 31.0 to   68.3 μm 25 % by vol. ± 20 %
 17.1 to   31.0 μm 15 % by vol. ± 10 %
  5.2 to   17.1 μm 12 % by vol. ± 10 %
             5.2 μm  5 % by vol. ±  5 %.
```

**2.** A platinum/graphite supported catalyst as claimed in claim 1, wherein the graphite support has an apparent density of from 1.7 to 2.2 g/ml.

**3.** A platinum/graphite supported catalyst as claimed in claim 1 or 2, wherein the graphite support has a compressive strength of from 50 to 250 N/mm².

**4.** A platinum/graphite supported catalyst as claimed in any of claims 1 to 3, wherein the graphite support has a porosity of from 1 to 40 %.

**5.** A platinum/graphite supported catalyst as claimed in any of claims 1 to 4, wherein the graphite support has a BET surface area of from 1 to 30 m²/g.

**6.** A platinum/graphite supported catalyst as claimed in any of claims 1 to 5, wherein the catalyst has been partially poisoned by sulfur and/or selenium.

**7.** The use of a platinum/graphite supported catalyst as claimed in any of claims 1 to 6 as a hydrogenation catalyst.

**8.** The use of a platinum/graphite supported catalyst as claimed in any of claims 1 to 6 for the preparation of hydroxylammonium salts by catalytic hydrogenation of nitrogen monoxide in aqueous mineral acids.

**Revendications**

1.  Catalyseurs au platine sur support de graphite, ayant une teneur en platine de 0,01 à 5% en poids, caractérisés en ce que le support de graphite présente une grosseur de grain de 1 à 600 μm et la répartition granulométrique suivante:

```
183    à 600  μm     15% en volume ± 15% en valeur absolue
68,3 à 183  μm     30% en volume ± 20%
31,0 à  68,3 μm     25% en volume ± 20%
17,1 à  31,0 μm     15% en volume ± 10%
 5,2 à  17,1 μm     12% en volume ± 10%
        < 5,2 μm      5% en volume ±  5%.
```

2.  Catalyseurs au platine sur support de graphite selon la revendication 1, caractérisés en ce que le support de graphite a une masse volumique apparente de 1,7 à 2,2 g/ml.

3.  Catalyseurs au platine sur support de graphite selon la revendication 1 ou 2, caracterisés en ce que le support de graphite présente une résistance à la pression de 50 à 250 N/mm$^2$.

4.  Catalyseurs au platine sur support de graphite selon l'une quelconque des revendications 1 à 3, caracterisés en ce que le support de graphite présente une porosité de 1 à 40%.

5.  Catalyseurs au platine sur support de graphite selon l'une quelconque des revendications 1 à 4, caractérisés en ce que le support de graphite a une surface BET de 1 à 30 m$^2$/g.

6.  Catalyseurs au platine sur support de graphite selon l'une quelconque des revendications 1 à 5, caractérisés en ce que le catalyseur est partiellement empoisonné par du soufre et/ou du sélénium.

7.  Utilisation de catalyseurs au platine sur support de graphite selon l'une quelconque des revendications 1 à 6 comme catalyseurs d'hydrogénation.

8.  Utilisation de catalyseurs au platine sur support de graphite selon l'une quelconque des revendications 1 à 6 pour la préparation de sels d'hydroxylammoniuim par hydrogénation catalytique de monoxyde d'azote dans des acides minéraux aqueux.